# EUROPÄISCHE PATENTANMELDUNG

(11) **EP 2 770 268 A1**
(43) Veröffentlichungstag der Anmeldung: **27.08.2014**
(21) Anmeldenummer: 14152088.2
(22) Anmeldetag: 22.01.2014
(51) Int. Cl.: F24H 1/18, F24H 9/12, F28D 20/00

(54) **Gehäuse zur Aufnahme mindestens eines Heizelements und Gehäusesystem**

(30) Priorität: 22.02.2013 DE 102013101792
(71) Anmelder: Wolf GmbH, 84048 Mainburg (DE)
(72) Erfinder: Hummel, Johann, 93149 Nittenau (DE); Forster, Gero, 84056 Rottenburg (DE)
(74) Vertreter: Popp, Eugen

(57) **Zusammenfassung**

Es wird ein Gehäuse (3) zur Aufnahme mindestens eines Heizelements (7), insbesondere mindestens eines elektrischen Heizelements zum Einbauen in den Heizkreislauf einer Wärmepumpe vorgeschlagen, wobei das Gehäuse (3) einen zylindrischen Grundkörper (9) und mindestens zwei Anschlüsse zum Anschluss des Gehäuses an den Heizkreislauf einer Wärmepumpe aufweist, wobei ein erster Anschluss einen Fluideinlass (11) und ein zweiter Anschluss einen Fluidauslass (13) für ein Heizfluid bildet. Das Gehäuse (3) zeichnet sich dadurch aus, dass es einstückig ausgebildet ist und eine Übergangskontur (21) zwischen dem Grundkörper (9) und dem Fluidauslass (13) aufweist, die zur Erzeugung eines homogenen Fluidflusses in dem Gehäuse (3) ausgebildet ist.

## Beschreibung

Die Erfindung betrifft ein Gehäuse zur Aufnahme mindestens eines Heizelements gemäß dem Oberbegriff des Anspruchs 1 sowie ein Gehäusesystem gemäß dem Oberbegriff des Anspruchs 15.

Gehäuse der hier angesprochenen Art sind beispielsweise aus der DE 10 2009 044 566 A1 bekannt. Die Gehäuse dienen zur Aufnahme mindestens eines Heizelements und insbesondere eines so genannten Elektro-Heizstabs. Derartige Heizelemente werden bei Wärmepumpen in den Heizkreislauf integriert, um bei sehr niedrigen Außentemperaturen, die insbesondere kleiner -5°C betragen den Heizbetrieb zu unterstützen und auf diese Weise eine komfortable Warmwasserbereitung zu erzielen. Am Zapfhahn werden oftmals Wassertemperaturen von 60°C gewünscht, die herkömmliche Luft-Wärmepumpen ohne Unterstützung bei niedrigen Außentemperaturen in der Regel nicht erreichen können. Das in dem Gehäuse angeordnete Heizelement erfüllt darüber hinaus die Funktion einer kurzfristigen Notheizung bei Störungen der Wärmepumpe. Das Gehäuse verfügt zum Zuführen eines Heizfluids über einen ersten Anschluss, der als Fluideinlass ausgebildet ist, und über einen zweiten Anschluss, der als Fluidauslass ausgebildet ist. Über den Fluideinlass strömt das Heizfluid in den Innenraum des Gehäuses, das üblicherweise einen im Wesentlichen zylindrischen Grundkörper aufweist. In dem Gehäuse umströmt das Heizfluid das Heizelement bzw. die Heizelemente, sofern mehrere vorgesehen sind, und strömt anschließend durch den Fluidauslass und entsprechend angeschlossene Leitungen zurück in den Heizkreislauf.

Die aus dem Stand der Technik bekannten Gehäuse bestehen üblicherweise aus mehreren Komponenten, wie Grundkörper, Boden, Deckel und Fluidanschlüsse, die aufwändig verschweißt oder verlötet werden, um die notwendige Dichtigkeit, Korrosions- und Temperaturbeständigkeit zu erreichen. Eine Demontage der einzelnen Komponenten des Gehäuses, beispielsweise zu Wartungs- oder Reparaturzwecken, ist bei den bekannten Gehäusen weder vorgesehen noch möglich. Ein weiterer Nachteil der bekannten Gehäuse zur Aufnahme der Heizelemente für einen Wärmepumpenkreislauf ergibt sich dadurch, dass die Fluidanschlüsse in Form von im Wesentlichen zylindrischen Fortsätzen einfach an den Grundkörper des Gehäuses an entsprechende Öffnungen eines Deckels des Grundkörpers angelötet werden, wodurch eine scharfkantige Abströmgeometrie resultiert. Durch diese scharfkantige Umlenkung ergibt sich eine turbulente, nichthomogene Strömung, die es zu vermeiden gilt. Insbesondere bei Verwendung von dem Gehäuse nachfolgenden Komponenten wie Durchflusssensoren etc. sind turbulente Strömungen nachteilig, weil diese Komponenten eine homogene Strömung für eine einwandfreie Funktion benötigen.

Aufgabe der vorliegenden Erfindung ist es daher, ein Gehäuse und ein Gehäusesystem zu schaffen, welches zum einen hinsichtlich der Strömungseigenschaften des Heizfluids optimiert ist und welches zum anderen eine einfache und kostengünstige Herstellung und einen einfachen Zugang zu Reinigungs-, Wartungs- und Reparaturzwecken umfasst.

Zur Lösung der oben genannten Aufgabe wird ein Gehäuse mit den Merkmalen des Anspruchs 1 vorgeschlagen. Das Gehäuse dient zur Aufnahme mindestens eines Heizelements, insbesondere mindestens eines elektrischen Heizelements zum Einbau in den Heizkreislauf einer Wärmepumpe. Das Gehäuse weist mindestens einen Grundkörper auf, der vorzugsweise zylindrisch ausgebildet ist sowie mindestens zwei Anschlüsse zum Anschluss des Gehäuses an den Heizkreislauf einer Wärmepumpe. Ein erster Anschluss bildet dabei einen Fluideinlass und ein zweiter Anschluss einen Fluidauslass für ein Heizfluid, insbesondere Heizwasser, welches im Heizkreislauf zirkuliert. Das Gehäuse zeichnet sich dadurch aus, dass es einstückig ausgebildet ist und eine Übergangskontur zwischen dem Grundkörper und dem Fluidauslass aufweist, die zur Erzeugung eines homogenen Fluidflusses in dem Gehäuse ausgebildet ist.

Durch die einstückige Ausbildung des Gehäuses sind keine Lötverbindungen zwischen dem Fluidauslass und dem Grundkörper des Gehäuses notwendig, so dass scharfkantige Abströmgeometrien vermieden werden können. Die Übergangskontur zur Erzeugung eines homogenen Fluidflusses, die zwischen dem Grundkörper und dem Fluidauslass vorgesehen ist, ermöglicht dabei die einwandfreie Funktion von nachfolgenden Einrichtungen wie Durchflusssensoren und dergleichen. Darüber hinaus verhindert eine homogene Strömung Störabschaltungen und insbesondere partielle Überhitzungen des Heizelements, die bis zur Zerstörung führen können. Weiterhin wird durch die gleichmäßige Beaufschlagung des Heizelements mit Heizwasser eine maximale Leistungsübertragung erreicht. Mit einer bedarfsabhängigen Leistungsübertragung in Verbindung mit einer regelbaren hocheffizienten Pumpe wird nur die für den jeweiligen Betriebspunkt notwendige elektrische Energie verbraucht. Dadurch wird ein kostengünstiger Betrieb der Wärmepumpe und eine hohe Lebensdauer der Heizeinrichtung erreicht. Durch die einstückige Ausbildung des Gehäuses lässt sich nicht nur eine optimale Übergangskontur zur Erzeugung eines homogenen Fluidflusses realisieren, sondern gleichzeitig ergibt sich hierdurch ein erheblicher Vorteil bezüglich der Dichtigkeit und der Herstellungskosten des Gehäuses.

Besonders vorteilhaft ist ein erfindungsgemäßes Gehäuse, bei dem die Übergangskontur an die Geometrie und die Lage des mindestens einen Heizelements sowie an die Anzahl der Heizelemente angepasst ist. Die Austrittsgeometrie, d.h. die Übergangskontur, ist dabei jeweils so gestaltet, dass sich am Austritt des Heizfluids aus dem Gehäuse eine nahezu homogene Strömung ergibt, die jeweils hinsichtlich der Form und Ausprägung in Abhängigkeit der zum Einsatz kommenden Heizelemente unterschiedlich sein kann. Besonders vorteilhaft ist es, wenn die Übergangskontur als Rotationskörper ausgebildet ist, der insbesondere symmetrisch bezüglich einer Längsachse des Grundkörpers des Gehäuses ausgebildet ist. Die Übergangskontur und insbesondere der Rotationskörper ist dabei vorzugsweise im Wesentlichen Konusoder glockenförmig ausgebildet. Mit anderen Worten verjüngt sich die Übergangskontur vom Grundkörper des Gehäuses kontinuierlich hin zum Fluidauslass des Gehäuses. Zur Erzeugung der Übergangskontur können dabei Radien, Phasen und/oder Abschrägungen zum Einsatz kommen, die zwischen dem Grundkörper und dem Fluidauslass die Übergangskontur im Inneren des Gehäuses prägen. Die Anzahl und Ausprägung dieser Radien, Phasen und/oder Abschrägungen kann wiederum an die jeweilig verwendeten Heizelemente in optimaler Weise angepasst werden. Hierzu kann vorgesehen sein, dass die optimale Übergangskontur zwischen dem Grundkörper und dem Fluidauslass vor der Herstellung des Gehäuses durch ein entsprechendes Simulationsprogramm zur Bestimmung der optimalen Übergangskontur simuliert wird.

Der Fluideinlass und der Fluidauslass sind vorzugsweise in Form von Fortsätzen ausgebildet, die zum Anschließen von Leitungen des Heizkreislaufs vorgesehen sind. Ihre äußere Geometrie ist also vorzugsweise auf die anzuschließenden Leitungen abgestimmt. Der Fluideinlass ist dabei vorzugsweise an der Umfangsfläche des im Wesentlichen zylindrischen Grundkörpers angeordnet. Es kann jedoch auch vorgesehen sein, dass der Fluideinlass in einem das Gehäuse verschließenden Deckel angeordnet ist. Nicht ausgeschlossen ist darüber hinaus, dass weitere Anschlüsse an dem Gehäuse vorgesehen sein können. Diese weiteren Anschlüsse, bei denen es sich insbesondere um Fluideinlässe handelt, können sowohl im Deckel als auch in der Umfangsfläche des Grundkörpers angeordnet sein. Beispielsweise können mehr Fluideinlässe notwendig sein, wenn eine Bypassleitung an das Gehäuse angeschlossen werden soll oder mehrere Rücklaufleitungen aus dem Heizungssystem zurückführen. Bei der Bypassleitung kann es sich z.B. auch um eine Rücklaufleitung aus einem Speicherwassererwärmer handeln. Der Fluidauslass hingegen ist vorzugsweise im Bereich einer Stirnseite des Gehäuses angeordnet, die im eingebauten Zustand des Gehäuses in Richtung Boden, also nach unten zeigt. Gegenüber der Stirnseite, die den Fluidauslass aufweist, ist vorzugsweise eine Öffnung im Gehäuse vorgesehen, über die das mindestens eine Heizelement in das Gehäuse einführbar ist. Die Öffnung ist vorzugsweise mit einem Deckel verschließbar. Das Gehäuse weist zur Aufnahme des Deckels vorzugsweise Verriegelungselemente zur Ausbildung eines Schnellverschlusses auf, wobei die Verriegelungselemente vorzugsweise einstückig mit dem Gehäuse ausgebildet sind. Besonders vorteilhaft ist es, wenn der Schnellverschluss als Bajonettverschluss ausgebildet ist.

Das Gehäuse kann beispielsweise aus Kunststoff hergestellt sein. Dabei kommt als Herstellungsverfahren insbesondere ein Spritzgussverfahren oder ein sonstiges Kunststoff verarbeitendes Verfahren in Betracht. Auf diese Weise kann das Gehäuse nicht nur in einfacher Weise an eine optimale vorbestimmte Übergangskontur im Bereich zwischen dem Grundkörper und dem Fluidauslass angepasst sein, sondern es ist darüber hinaus kostengünstig herstellbar und an verschieden ausgebildete Heizelemente ohne Weiteres anpassbar. Das Heizelement bzw. die Heizelemente können beispielsweise spiralförmig ausgebildet sein. Es kann jedoch auch vorgesehen sein, das Gehäuse als Gussteil, beispielsweise in einem entsprechenden Gussverfahren, wie beispielsweise im Messingguss- oder Aluminium-Druckgussverfahren herzustellen. Auch in diesem Fall erfolgt die Herstellung des Gehäuses nicht nur in optimaler Weise abgestimmt auf die Art und Anzahl der Heizelemente unter Vermeidung von scharfkantigen Abströmgeometrien, sondern darüber hinaus kostengünstig, wobei eine aufwändige Montage mittels Löt- und Schweißverfahren vermieden wird. Das Gehäuse wird derart an die Ausbildung des Heizelements bzw. der Heizelemente angepasst, dass die Längsachse des im Wesentlichen zylindrischen Gehäuses vorzugsweise übereinstimmt mit der Längsachse des (spiralförmigen) Heizelements.

Zur Lösung der oben genannten Aufgabe wird auch ein Gehäusesystem mit den Merkmalen des Anspruchs 15 vorgeschlagen. Das Gehäusesystem umfasst ein erfindungsgemäßes Gehäuse, einen Deckel zum Verschließen des Gehäuses und mindestens ein in dem Gehäuse angeordnetes Heizelement. Hinsichtlich der Vorteile eines derartigen Gehäusesystems wird im Wesentlichen auf die Ausführungen zum Gehäuse gemäß der Erfindung verwiesen. Darüber hinaus sei auf die verbesserte Zugänglichkeit eines derartigen Gehäuses hingewiesen. Der Deckel des Gehäusesystems lässt sich nämlich ohne Weiteres von dem Gehäuse, insbesondere mittels eines Schnellverschlusses entfernen, so dass zu Reinigungs-, Wartungs- oder Reparaturzwecken das Heizelement jederzeit aus dem Gehäuse entfernt werden kann. Der Schnellverschluss ist dabei vorzugsweise als Bajonettverschluss mit entsprechenden Verriegelungselementen ausgebildet. Die Verriegelungselemente sind vorzugsweise einstückig mit dem Gehäuse verbunden und bestehen also vorzugsweise aus dem jeweiligen Material des Gehäuses. Die Heizelemente sind vorzugsweise mit dem Deckel verbunden. Insbesondere kann vorgesehen sein, dass die Anschlüsse, insbesondere die elektrischen Anschlüsse, des mindestens einen Heizelements als Steckverbindungen ausgebildet sind, die den Deckel durchgreifen. Auf der dem Heizelement gegenüberliegenden Seite des Deckels kann dann eine entsprechende Heizsteuerungseinrichtung unmittelbar mit dem Deckel und mit den Anschlüssen des Heizelements verbunden werden. Insgesamt lässt sich mit dem erfindungsgemäßen Gehäusesystem das Heizelement schnell und einfach in das Gehäuse einbauen und sicher mittels eines Schnellverschlusses fixieren. Dadurch, dass keine Schweißverbindungen zwischen dem Deckel und dem Gehäuse zur Anwendung kommen, ist ein problemloser Zugang zum Heizelement gewährleistet. Das Gehäusesystem stellt insgesamt eine kompakte Einheit dar, die ohne großen Aufwand kostengünstig in kurzer Zeit herstellbar ist.

Die Erfindung wird im Folgenden anhand der Zeichnung näher erläutert.

Es zeigen:
- Fig. 1: eine schematische Querschnittansicht eines erfindungsgemäßen Gehäusesystems;
- Fig. 2: eine schematische Darstellung der Strömungsverhältnisse im Bereich der Übergangskontur eines erfindungsgemäßen Gehäuses, und
- Fig. 3: eine Draufsicht auf den Deckel eines erfindungsgemäßen Gehäusesystems.

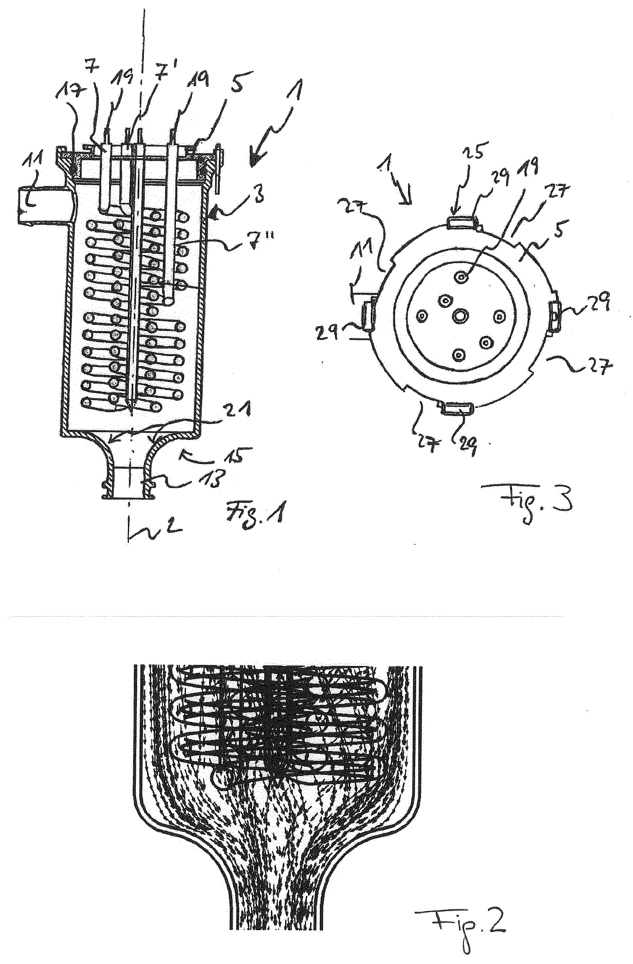

Die Fig. 1 zeigt ein Gehäusesystem 1 mit einem Gehäuse 3 und einem Deckel 5, der eine Öffnung des Gehäuses 3 verschließt. Im vorliegenden Ausführungsbeispiel umfasst das Gehäusesystem weiterhin drei Heizelemente 7, 7' und 7", die jeweils spiralförmig ausgebildet sind und zumindest zwei der Heizelemente jeweils bereichsweise konzentrisch zueinander angeordnet sind. Die Heizelemente sind über die durch den Deckel 5 verschließbare Öffnung in das Gehäuse 3 einführbar. Es versteht sich, dass die Anzahl, Anordnung und Ausprägung der Heizelemente hier rein beispielhaft gewählt ist.

Das Gehäuse 3 umfasst zwei Anschlüsse zum Integrieren des Gehäuses 3 in den Heizkreislauf einer Wärmepumpe. Ein erster Anschluss, der im vorliegenden Ausführungsbeispiel an einem im Wesentlichen zylindrisch ausgebildeten Grundkörper 9 des Gehäuses 3 angeordnet ist, bildet einen Fluideinlass 11, während ein zweiter Anschluss einen Fluidauslass 13 bildet. Damit das Heizfluid die Heizelemente möglichst großflächig umfließt, ist der Fluideinlass 11 vorzugsweise nahe der Öffnung des Gehäuses, d.h. im oberen Teil des Gehäuses 3 angeordnet. Der Fluidauslass 13 ist hingegen an einer Stirnseite 15 im unteren Teil des Gehäuses 3 angeordnet, die im Einbauzustand des Gehäusesystems 1 dem Boden zugewandt ist. Sowohl der Fluideinlass 11 als auch der Fluidauslass 13 sind als Fortsätze ausgebildet und weist eine Außenkontur auf, die im Wesentlichen zylindrisch ist und zum Anschluss an eine entsprechende Leitung des Heizkreislaufs angepasst ist. Der Fluideinlass 11 muss nicht zwangsläufig mit dem Grundkörper 9 des Gehäuses 3 in Verbindung stehen. Vielmehr ist es auch denkbar, den Fluideinlass 11 im Deckel 5 auszubilden, so dass der Grundkörper 9 eine im Wesentlichen durchgängige zylindrische Außenkontur aufweist. Der Grundkörper 9, der Fluideinlass 11 und der Fluidauslass 13 sind einstückig ausgebildet.

Der Deckel 5 ist über eine O-Ring-Dichtung 17 mit dem Gehäuse 3 verbunden. Die Heizelemente 7, 7' und 7" sind im Inneren des Gehäuses 3 angeordnet und erstrecken sich in einer Richtung, die übereinstimmt mit der Längsachse L des Gehäuses 3. Die Heizelemente sind mit dem Deckel 5 derart verbunden, dass sich die (elektrischen) Anschlüsse 19 der Heizelemente, die insbesondere als Steckanschlüsse ausgebildet sind, durch den Deckel 5 in entsprechenden Ausnehmungen hindurch erstrecken. Die Heizelemente können auf diese Weise einfach mit einer Energiequelle bzw. mit einer Heizungssteuerung verbunden werden (in der Fig. 1 nicht gezeigt).

Zwischen dem Grundkörper 9 und dem Fluidauslass 13 des Gehäuses 3 ist eine Übergangskontur 21 angeordnet, die zur Erzeugung eines homogenen Fluidflusses des Heizfluids in dem Gehäuse 3 ausgebildet ist. Die Übergangskontur 21 ist einstückig mit dem Grundkörper 9 und dem Fluidauslass 13 verbunden. Die Übergangskontur ist vorzugsweise an die Anzahl, Geometrie und die Lage der Heizelemente in dem Gehäuse 3 individuell angepasst. Sie ist vorzugsweise rotationssymmetrisch bezüglich der Längsachse L des Gehäuses 3 ausgebildet und bildet folglich einen Rotationskörper, der ausgehend von dem Grundkörper 9 hin zu dem Fluidauslass 13 verjüngend ausgebildet ist. Es ergibt sich hierdurch eine im Wesentlichen konus- oder glockenförmige Kontur des Übergangsbereichs zwischen dem Grundkörper 9 und dem Fluidauslass 13, der die Übergangskontur bildet. Eine optimale Übergangskontur kann im Vorfeld der Herstellung des Gehäuses durch eine entsprechende Simulation der Strömungsverhältnisse bei Verwendung eines bzw. mehrerer bestimmter Heizelemente bestimmt werden. Entscheidend ist, dass sich im Übergangsbereich zwischen dem Grundkörper 9 und dem Fluidauslass 13 keine scharfe Abströmgeometrie ergibt, sondern ein kantenfreier fließender bzw. abgerundeter Übergang zwischen dem Grundkörper und dem Fluidauslass gewährleistet ist, der eine homogene Strömung erzeugt. Zur Ausbildung der optimalen Übergangskontur kann der Übergangsbereich zwischen dem Grundkörper und dem Fluidauslass mit einem entsprechenden Radius bzw. verschiedenen Radien sowie Phasen und/oder Abschrägungen versehen sein.

Die Fig. 2 zeigt einen schematischen Strömungsverlauf 23 eines Heizfluids, welches ausgehend von dem Fluideinlass 11 (in der Fig. 2 nicht gezeigt) zu dem Fluidauslass 13 entlang der Übergangskontur 21 fließt und dabei die Heizelemente 7 umströmt. Die Fig. 2 macht deutlich, dass durch die sich verjüngende Ausbildung der Übergangskontur 21 zwischen dem Grundkörper 9 und dem Fluidauslass 13 ein homogener Strömungsverlauf 23 resultiert, der eine gleichmäßige Umströmung der Heizelemente und einen verwirbelungsfreien Abgang des Heizfluids ohne Turbulenzen erzeugt.

Durch die einstückige Ausbildung des Gehäuses 3 und damit die einstückige Ausbildung des Grundkörpers 9, der Übergangskontur 21 und des Fluidauslasses 13 ist eine einfache Herstellung der Übergangskontur und eine Anpassung an verschiedene Heizelement-Geometrien möglich. Beispielsweise dann, wenn das Gehäuse 3 aus Kunststoff beispielsweise mittels eines Spritzgussverfahrens hergestellt wird, kann eine entsprechende Spritzgussform individuell an beliebige Heizelemente angepasst werden.

Die Fig. 3 zeigt noch eine Draufsicht auf den Deckel 5 des Gehäuses 3, aus dem die Anschlüsse 19 der Heizelemente 7 herausragen. Zur Befestigung des Deckels 5 an dem Gehäuse 3 ist vorzugsweise ein Schnellverschluss 25 vorgesehen, der im vorliegenden Ausführungsbeispiel als Bajonettverschluss ausgebildet ist. Hierzu umfasst der Deckel 5 insgesamt vier in den Randbereich eingebrachte Aussparungen 27, die mit am Gehäuse 3 vorgesehenen und insbesondere einstückig damit ausgebildeten Vorsprüngen 29 zusammenwirken. Die Vorsprünge sind dabei als Verriegelungselemente ausgebildet, die eine Drehbewegung des Deckels 5 derart erlauben, dass die Verriegelungselemente 29 in Eingriff mit der Oberseite des Deckels 5 kommen. Es handelt sich somit um einen Drehverschluss, der jederzeit das Öffnen des Deckels 5 zulässt. Auf diese Weise wird ein schneller Zugang zum Inneren des Gehäuses 3, beispielsweise zu Wartungs- oder Reinigungszwecken gewährleistet. Unmittelbar an dem Deckel kann im Übrigen eine Heizungssteuerung und/oder eine Energiequelle vorgesehen sein.

Insgesamt schafft die vorliegende Erfindung ein Gehäuse 3 und ein entsprechendes Gehäusesystem 1, welches einerseits einfach und kostengünstig herstellbar ist, welches darüber hinaus optimale Strömungsverhältnisse am Fluidauslass bereitstellt, und welches eine einfache Zugänglichmachung zu Reinigungs-, Wartungs- und Reparaturzwecken gewährleistet.

### Bezugszeichenliste

- 1: Gehäusesystem
- 3: Gehäuse
- 5: Deckel
- 7, 7', 7": Heizelemente
- 9: Grundkörper
- 11: Fluideinlass
- 13: Fluidauslass
- 15: Stirnseite
- 17: Dichtung
- 19: Anschlüsse
- 21: Übergangskontur
- 23: Strömungsverlauf
- 25: Schnellverschluss
- 27: Aussparung
- 29: Verriegelungselement
- L: Längsachse

## Patentansprüche

1. Gehäuse (3) zur Aufnahme mindestens eines Heizelements (7), insbesondere mindestens eines elektrischen Heizelements zum Einbau in den Heizkreislauf einer Wärmepumpe, mit einem zylindrischen Grundkörper (9) und mindestens zwei Anschlüssen zum Anschluss des Gehäuses an den Heizkreislauf einer Wärmepumpe, wobei ein erster Anschluss einen Fluideinlass (11) und ein zweiter Anschluss einen Fluidauslass (13) für ein Heizfluid bildet,
**dadurch gekennzeichnet, dass**
das Gehäuse (3) einstückig ausgebildet ist und eine Übergangskontur (21) zwischen dem Grundkörper (9) und dem Fluidauslass (13) aufweist, die zur Erzeugung eines homogenen Fluidflusses in dem Gehäuse (3) ausgebildet ist.

2. Gehäuse nach Anspruch 1,
**dadurch gekennzeichnet,dass**
die Übergangskontur (21) an die Geometrie und Lage des mindestens einen Heizelements (7) sowie an die Anzahl der Heizelemente (7) angepasst ist.

3. Gehäuse nach Anspruch 1 oder 2,
**dadurch gekennzeichnet,dass**
die Übergangskontur (21) als Rotationskörper ausgebildet ist, der insbesondere symmetrisch bezüglich einer Längsachse (L) des Grundkörpers (9) des Gehäuses (3) ist.

4. Gehäuse nach einem der vorhergehenden Ansprüche,
**dadurch gekennzeichnet, dass**
die Übergangskontur (21) im Wesentlichen konus- oder glockenförmig ausgebildet ist.

5. Gehäuse nach einem der vorhergehenden Ansprüche,
**dadurch gekennzeichnet,dass**
die Übergangskontur (21) Radien, Fasen und/oder Abschrägungen zwischen dem zylindrischen Grundkörper (9) und dem Fluidauslass (13) aufweist.

6. Gehäuse nach einem der vorhergehenden Ansprüche,
**dadurch gekennzeichnet, dass**
der Fluideinlass (11) und der Fluidauslass (13) als Fortsätze zum Anschließen von Leitungen des Heizkreislaufs ausgebildet sind.

7. Gehäuse nach einem der vorhergehenden Ansprüche,
**dadurch gekennzeichnet, dass**
der Fluideinlass (11) an der Umfangsfläche des Grundkörpers (9) angeordnet ist.

8. Gehäuse nach einem der vorhergehenden Ansprüche,
**dadurch gekennzeichnet, dass**
der Fluidauslass (13) im Bereich einer Stirnseite (15) des Gehäuses (3) angeordnet ist.

9. Gehäuse nach einem der vorhergehenden Ansprüche,
**dadurch gekennzeichnet,dass**
das Gehäuse (3) an der dem Fluideinlass (11) gegenüberliegenden Stirnseite eine Öffnung aufweist, über die das mindestens eine Heizelement (7) in das Gehäuse (3) einführbar ist.

10. Gehäuse nach einem der vorhergehenden Ansprüche,
**dadurch gekennzeichnet,dass**
die Öffnung mit einem Deckel (5) verschließbar ist.

11. Gehäuse nach einem der vorhergehenden Ansprüche,
**dadurch gekennzeichnet, dass**
das Gehäuse (3) aus Kunststoff, insbesondere im Spritzgussverfahren hergestellt ist.

12. Gehäuse nach einem der vorhergehenden Ansprüche,
**dadurch gekennzeichnet, dass**
das Gehäuse (3) als Gussteil, insbesondere in einem Metallgussverfahren hergestellt ist.

13. Gehäuse nach einem der vorhergehenden Ansprüche,
**dadurch gekennzeichnet, dass**
das mindestens eine Heizelement (7) spiralförmig ausgebildet ist.

14. Gehäuse nach einem der vorhergehenden Ansprüche,
**dadurch gekennzeichnet, dass**
mehrere Fluideinlässe (11) an der Umfangsfläche des Grundkörpers (9) angeordnet sind.

15. Gehäusesystem (1) zur Integration in einen Heizkreislauf, umfassend:
- ein Gehäuse (3) nach einem der Ansprüche 1 bis 13;
- einen Deckel (5) zum Verschließen des Gehäuses (3) und
- mindestens ein in dem Gehäuse (3) angeordnetes Heizelement (7).

16. Gehäusesystem nach Anspruch 15,
**dadurch gekennzeichnet, dass**
das mindestens eine Heizelement (7) mit dem Deckel (5) verbunden ist.

17. Gehäusesystem nach Anspruch 15 oder 16,
**dadurch gekennzeichnet, dass**
das mindestens eine Heizelement (7) insbesondere elektrische Anschlüsse (19) aufweist, die vorzugsweise als Steckverbindungen ausgeführt sind, die den Deckel (5) durchgreifen.

18. Gehäusesystem nach einem der vorhergehenden Ansprüche 15 bis 17,
**dadurch gekennzeichnet, dass**
der Deckel (5) und das Gehäuse (3) mittels eines Schnellverschlusses (25), insbesondere mittels eines Bajonettverschlusses, miteinander verbindbar sind.

19. Gehäusesystem nach einem der vorhergehenden Ansprüche 15 bis 18,
**dadurch gekennzeichnet, dass**
Verriegelungselemente (29) des Schnellverschlusses (25), insbesondere des Bajonettverschlusses einstückig mit dem Gehäuse (3) ausgebildet sind.

20. Gehäusesystem nach einem der vorhergehenden Ansprüche 15 bis 19,
**dadurch gekennzeichnet,dass**
der Deckel (5) mit einer Heizsteuerungseinrichtung unmittelbar verbunden ist.

21. Gehäusesystem nach einem der vorhergehenden Ansprüche 15 bis 20,
**dadurch gekennzeichnet, dass**
mindestens ein Fluideinlass (11) im Deckel (5) angeordnet ist.

22. Gehäusesystem nach einem der vorhergehenden Ansprüche 15 bis 21,
**dadurch gekennzeichnet, dass**
mindestens ein Fluideinlass (11) an der Umfangsfläche des Grundkörpers (9) und mindestens ein weiterer Fluideinlass im Deckel (5) angeordnet sind.
